## Europäisches Patentamt
## European Patent Office
## Office européen des brevets

(19)

(11) Numéro de publication: **0 088 015 B1**

(12) **FASCICULE DE BREVET EUROPEEN**

(45) Date de publication du fascicule du brevet:
**27.08.86**

(51) Int. Cl.⁴: **B 62 D 31/00,** B 60 J 5/04

(21) Numéro de dépôt: 83400379.0

(22) Date de dépôt: **24.02.83**

(54) Véhicule automobile monocorps.

(30) Priorité: **25.02.82 FR 8203468**

(43) Date de publication de la demande:
**07.09.83 Bulletin 83/36**

(45) Mention de la délivrance du brevet:
**27.08.86 Bulletin 86/35**

(84) Etats contractants désignés:
**DE GB IT**

(56) Documents cités:
**FR - A - 869 618**
**FR - A - 956 318**
**FR - A - 1 096 788**
**FR - A - 1 139 126**
**FR - A - 2 044 089**
**GB - A - 507 899**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **De Lavenne, Hubert, 5, rue Bussières, F-92190 Meudon (FR)**

(74) Mandataire: **Boivin, Claude, 9, rue Edouard-Charton, F-78000 Versailles (FR)**

ACTORUM AG

EP 0 088 015 B1

### Description

On entend par véhicules monocorps, les véhicules automobiles dont la section longitudinale de la forme extérieure ne présente pas d'inversion sensible de courbure au niveau du raccordement du pare-brise et de la lunette arrière avec respectivement la face avant et la face arrière du véhicule.

Par rapport aux véhicules classiques à trois corps ou à deux corps, les véhicules monocorps permettent pour une même habitabilité la réalisation de véhicules plus courts, donc plus légers, et de plus faible traînée aérodynamique, ce qui conduit à une économie importante de carburant.

Les véhicules monocorps, dans lesquels les sièges sont disposés de manière traditionnelle, c'est-à-dire qui sont munis de deux sièges à l'avant et d'une banquette à l'arrière, posent, du fait de la présence des roues avant, un problème d'accessibilité qui est difficilement résolu jusqu'à présent par des moyens simples et économiques; des solutions peuvent être envisagées (portes coulissantes) mais elles se révèlent peu pratiques et contraires aux habitudes des utilisateurs.

C'est ainsi, par exemple, que le brevet GB-A-507 899 décrit un véhicule monocorps qui est muni à l'avant d'un ou deux sièges montés coulissants sur des glissières longitudinales et à l'arrière d'une banquette et qui comporte de chaque côté au moins une ouverture d'accès pouvant être fermée par une porte battante à axe sensiblement vertical dont le bord avant se trouve sensiblement à l'aplomb du montant d'encadrement de pare-brise en étant sensiblement parallèle à celui-ci.

Mais dans le véhicule qui fait l'objet de ce brevet, les sièges avant sont disposés au-dessus des roues avant, ce qui entraîne une perte de place et la nécessité de prévoir des roues de petit diamètre, ce qui nuit notamment à la stabilité du véhicule.

La présente invention a pour objet un véhicule du type ci-dessus, mais dans lequel les sièges avant sont, de la manière usuelle, disposés entre les roues avant.

Ce siège est caractérisé en ce que le bord arrière de l'ouverture est disposé sensiblement à l'aplomb du bord arrière de l'assise de la banquette, en ce que la position normale de conduite est déterminée de manière que l'avant de l'assise du ou des sièges se trouve, en position de réglage médiane, sensiblement au niveau du bord avant de l'ouverture d'accès, et en ce que les glissières permettent de reculer le siège au-delà de la position qui lui donne un occupant de grande taille pour avoir la meilleure sensation de confort.

Dans ces conditions, l'accessibilité à une place avant est assurée en reculant au maximum vers l'arrière le siège avant, l'utilisation avançant ensuite son siège plus ou moins vers l'avant suivant sa taille, après s'être assis. L'accessibilité à la banquette arrière ne pose aucun problème, car le bord arrière de l'ouverture se trouve pratiquement au même niveau que celui de la porte arrière d'un véhicule à quatre portes de type usuel.

Dans la pratique, la disposition définie ci-dessus conduit à donner aux glissières longitudinales une longueur supérieure à celle des glissières usuelles de sorte que, si ces glissières sont fixées sur le plancher du véhicule, elles risquent de gêner les occupants de la banquette arrière.

Selon une caractéristique complémentaire qui remédie à cet inconvénient, au moins l'une des glissières est fixée sur une paroi verticale d'un élément de structure longitudinal ou bien est au moins partiellement encastrée à l'intérieur de cet élément de structure. Par exemple, dans le cas de deux sièges avant, les glissières intérieures peuvent être fixées sur un tunnel longitudinal alors que les glissières extérieures sont encastrées en tout ou partie à l'intérieur du longeron adjacent.

On a décrit ci-après, à titre d'exemple non limitatif, un mode de réalisation d'un véhicule monocorps selon l'invention, avec référence aux dessins annexés dans lesquels:

La fig. 1 est une vue en élévation schématique du véhicule les sièges avant étant dans leur position médiane;

Les figs 2 et 3 sont des vues semblables à la fig. 1, les sièges avant occupant respectivement leur position extrême arrière et leur position extrême avant;

La fig. 4 est une vue en coupe verticale transversale d'un siège avant;

La fig. 5 en est une coupe verticale suivant V–V de la fig. 4.

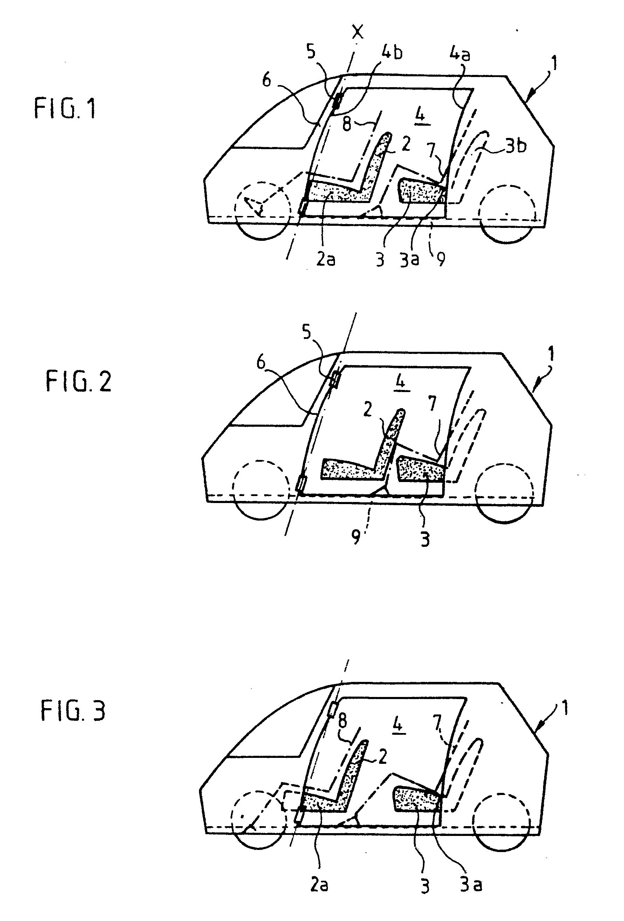

Tel qu'il est représenté à la fig. 1, le véhicule 1 selon l'invention est du type monocorps. Dans son habitacle sont disposés deux sièges avant 2 réglables longitudinalement et une banquette arrière 3.

Le véhicule 1 comporte de chaque côté une ouverture d'accès 4 qui peut être fermée par une porte battante non représentée et reliée à la carrosserie du véhicule par des charnières 5, d'axe X–X, disposées à l'aplomb du montant d'encadrement 6 du pare-brise. Cette ouverture a sensiblement les mêmes dimensions que celles d'une porte d'un véhicule classique à deux portes, donc une largeur supérieure à celle d'une porte d'un véhicule à quatre portes.

Le bord arrière 4a de l'ouverture 4 est disposé par rapport à la banquette 3 sensiblement au même niveau que celui de la porte arrière d'un véhicule à quatre portes, c'est-à-dire sensiblement à l'aplomb du bord arrière 3a de l'assise de la banquette, légèrement devant le dossier 3b de cette banquette. Le bord avant de l'assise 2a des sièges 2, lorsque ceux-ci occupent leur position de réglage moyen, qui est celle représentée à la fig. 1, est situé sensiblement au niveau du bord avant 4b de l'ouverture 4, donc sensiblement à l'aplomb du montant d'encadrement 6 du pare-brise. La position normale de conduite est donc située plus en avant que dans un véhicule usuel; pour cela, les positions des éléments de conduite, par exemple celle du volant, de celle des pédales et celle des tableaux de bord, sont avancées par rapport à leur position dans un véhicule usuel.

Le groupe motopropulseur non représenté peut être à l'avant ou à l'arrière.

Du fait de la place du bord arrière 4a de l'ouverture 4, l'accès à la banquette arrière 3 s'effectue aussi aisément que dans un véhicule à quatre portes, sans qu'il soit nécessaire de modifier la position ou l'inclinaison du siège avant. Pour accéder aux places avant, on recule au maximum le siège avant 2, comme le montre la fig. 2; le siège avant occupant cette position, il reste suffisamment de place derrière lui pour que les passagers assis sur la banquette 3 et qui sont schématisés en 7, puissent rester à leur place pendant la manœuvre. Lorsque l'occupant d'une place avant schématisé en 8, s'est assis sur son siège, il règle longitudinalement celui-ci en lui redonnant sa position de la fig. 1, s'il est de taille moyenne, ou en l'avançant au maximum vers l'avant, comme le montre la fig. 3, s'il est de petite taille.

Dans la pratique, le recul maximal du siège avant 2 doit être supérieur à celui nécessaire pour qu'un occupant de grande taille puisse l'occuper sans gêne. En d'autres termes, la position de la fig. 2 n'est pas une position d'utilisation normale; elle est destinée à permettre l'accessibilité aux sièges avant.

Les glissières de support des sièges avant 2 doivent donc s'étendre vers l'arrière plus loin que cela serait nécessaire pour le réglage du siège. Par suite, si elles étaient fixées sur le plancher du véhicule, elles encombreraient le plancher et risqueraient de gêner les passagers arrières 7.

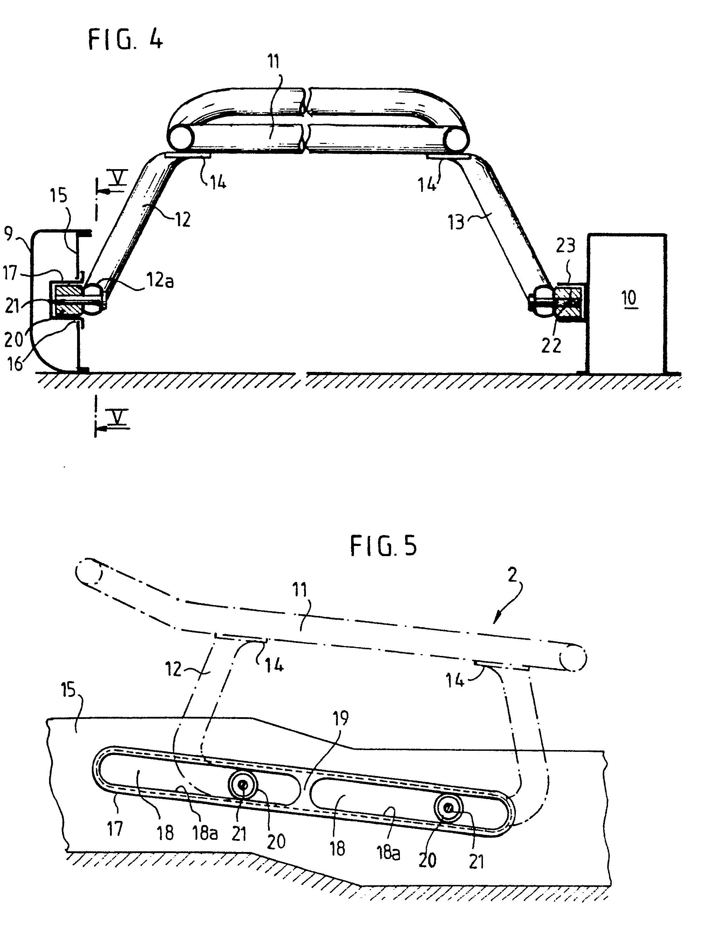

Dans le mode de réalisation des figs 4 et 5, qui remédie à cet inconvénient, chacun des sièges est supporté par le longeron adjacent 9 et le tunnel central 10 qui sert au passage de l'arbre de transmission dans le cas où le moteur est à l'avant, ou des commandes si ce moteur est à l'arrière. De manière plus précise, l'assise d'un siège 2 est constituée par un cadre 11 sur lequel deux montants latéraux tubulaires 12 et 13 sont fixés en des points tels que 14.

Le montant latéral extérieur 12 est cintré en forme de C et disposé dans un plan oblique par rapport à la verticale. Sa partie inférieure, qui est ainsi déportée latéralement par rapport au cadre 11 se trouve au voisinage immédiat d'un voile interne 15 qui ferme le longeron 9. Ce voile 15 comporte une ouverture 16 dans laquelle est engagé et fixé par exemple par soudure un boîtier 17 dont la face longitudinale extérieure est ouverte. Ce boîtier comporte deux chambres 18 séparées l'une de l'autre par une nervure de rigidité 19. La paroi inférieure 18a de chacune des chambres 18 constitue un chemin de roulement pour un galet 20 qui est monté à rotation en porte-à-faux sur un axe 21 fixé au droit d'une zone aplatie 12a de la partie inférieure du montant 12, en étant orienté vers l'extérieur, perpendiculairement à ladite zone.

Le montant latéral extérieur 13 est lui aussi disposé dans un plan oblique par rapport à la verticale. Il porte des galets 22 qui sont montés coulissants sur un rail 23 fixé latéralement au tunnel central 10.

Il va de soi que la présente invention ne doit pas être considérée comme limitée au mode de réalisation décrit et représenté.

**Revendications**

1. Véhicule monocorps qui est muni à l'avant d'un ou deux sièges (2) montés coulissants sur des glissières longitudinales et à l'arrière d'une banquette (3) et qui comporte de chaque côté au moins une ouverture d'accès (4) pouvant être fermée par une porte battante à axe sensiblement vertical dont le bord avant (4b) se trouve sensiblement à l'aplomb du montant d'encadrement de pare-brise en étant sensiblement parallèle à celui-ci, caractérisé en ce que le bord arrière (4a) de l'ouverture (4) est disposé sensiblement à l'aplomb du bord arrière (3a) de l'assise de la banquette (3), en ce que la position normale de conduite est déterminée de manière que l'avant de l'assise du ou des sièges (2) se trouve, en position de réglage médiane, sensiblement au niveau du bord avant (4b) de l'ouverture d'accès (4), et en ce que les glissières permettent de reculer le siège au-delà de la position que lui donne un occupant de grande taille pour avoir la meilleure sensation de confort.

2. Véhicule monocorps selon la revendication 1, caractérisé en ce qu'au moins l'une des glissières est fixée sur une paroi verticale d'un élément de structure longitudinal ou bien est au moins partiellement encastrée à l'intérieur de cet élément de structure.

3. Véhicule monocorps selon la revendication 2, qui comporte deux sièges avant (2), caractérisé en ce que les glissières intérieures sont fixées sur un tunnel longitudinal (10) alors que les glissières extérieures sont encastrées en tout ou partie à l'intérieur du longeron adjacent (9).

**Claims**

1. Vehicle with one piece body having at the front one or two seats (2) mounted for sliding on longitudinal slides and at the rear a bench seat (3) and which comprises on each side at least one access opening (4) closable by means of a leaf door with substantially vertical axis whose front edge (4b) is substantially directly in line with the windscreen frame upright while being substantially parallel thereto, characterized in that the rear edge (4a) of the opening (4) is disposed substantially in line with the rear edge (3a) of the sitting portion of the bench seat (3), in that the normal driving position is determined so that the front of the sitting portion of the seat or seats (2) is, in the middle adjusted position, substantially at the level of the front edge (4b) of the access opening (4), and in that the slides allow the seat to be moved back beyond the position which a tall occupant requires so as to have the best feeling of comfort.

2. Vehicle with one piece body according to claim 1, characterized in that at least one of the slides is fixed on a vertical wall of a longitudinal structural element or else is at least partially set inside the structural element.

3. Vehicle with one piece body according to claim 2, which comprises two front seats (2), characterized in that the inner slides are fixed on a longitudinal tunnel (10) whereas the outer slides are set wholly or partially inside the adjacent longitudinal member (9).

**Patentansprüche**

1. Einkörperfahrzeug, das vorn mit einem oder zwei Sitzen (2), die verschiebbar auf Längsgleitschienen montiert sind, und hinten mit einer Sitzbank versehen ist und das auf jeder Seite mindestens eine Einstiegsöffnung (4) besitzt, die sich durch eine Klapptür mit deutlich senkrechter Achse schliessen lässt, deren Vorderkante (4b) deutlich senkrecht zum Rahmenpfosten der Windschutzscheibe steht und deutlich parallel zu diesem verläuft, dadurch gekennzeichnet, dass sich die Hinterkante (4a) der Öffnung (4) deutlich senkrecht zur Hinterkante der Halterung der Sitzbank (3) befindet, dass sich bei normaler Fahrposition die Halterungsvorderkante des bzw. der Sitze (2) bei mittlerer Einstellung deutlich an der Vorderkante (4b) der Einstiegsöffnung (4) befindet und dass die Gleitschienen die Möglichkeit geben, den Sitz weiter nach hinten zu schieben, als für die optimale Bequemlichkeit einer grossgewachsenen Person notwendig ist.

2. Einkörperfahrzeug entsprechend Patentanspruch 1, dadurch gekennzeichnet, dass mindestens eine der Gleitschienen an der senkrechten Wand eines Längsbauteils befestigt ist oder zumindest teilweise in dieses Bauteil eingelassen ist.

3. Einkörperfahrzeug entsprechend Patentanspruch 2 mit zwei Sitzen vorn, dadurch gekennzeichnet, dass die inneren Gleitschienen auf einem Längstunnel (10) befestigt sind, während die äusseren Gleitschienen ganz oder teilweise in den angrenzenden Rahmenträger (9) eingelassen sind.

FIG. 1

FIG. 2

FIG. 3

## FIG. 4

## FIG. 5